# EUROPÄISCHE PATENTSCHRIFT

(11) **EP 0 654 611 B1**
(45) Veröffentlichungstag und Bekanntmachung des Hinweises auf die Patenterteilung: **07.01.1998**
(21) Anmeldenummer: 94250242.8
(22) Anmeldetag: 07.10.1994
(51) Int. Cl.: F16B 35/06, F16B 45/00

(54) **Ringschraube**
Ringscrew
Vis à boucle

(30) Priorität: 25.10.1993 DE 4336780; 03.02.1994 DE 4403785
(43) Veröffentlichungstag der Anmeldung: 24.05.1995
(73) Patentinhaber: RUD-KETTENFABRIK RIEGER & DIETZ GMBH U. CO., 73432 Aalen (DE)
(72) Erfinder: Smetz, Reinhard, Dipl.-Ing. (FH), D-86720 Baldingen (DE)
(74) Vertreter: Böning, Manfred, Dr.-Ing.

(56) Entgegenhaltungen:
- EP-A- 0 161 652

## Beschreibung

Die Erfindung betrifft eine Ringschraube mit einer zum Einhängen eines Anschlag- oder Zurrmittels dienenden Anschlußöse und einem zu ihrer Befestigung an einem Gegenstand dienenden Gewindezapfen, der sich über ein Halteglied am mit einer Bohrung versehenen Ösengrund abstützt und in den über das Halteglied eine Drehbewegung einleitbar ist.

Aus der EP 0 161 652 B1 ist eine Ringschraube der vorstehenden Art bekannt, die sich anders als ebenfalls bekannte Ringschrauben nach DIN 580 und DIN 582 bei schräg verlaufenden Anschlag- oder Zurrmitteln in Form von Ketten oder Seilen auf die Richtung der eingeleiteten Kraft einstellen kann. Bei der bekannten Ringschraube wird der zu ihrer Befestigung an einem Gegenstand dienende Gewindezapfen vom unteren Ende eines Gewindebolzens gebildet, dessen oberes Ende ebenfalls als Gewindezapfen ausgebildet ist und bei dem zwischen den beiden Gewindezapfen ein Bund angeordnet ist, der eine Anlagefläche für die der Halteöse abgewandte Seite des Ösengrundes bildet. Auf dem der Halteöse zugewandten Gewindezapfen des Gewindebolzens ist ein Halteglied geschraubt, das durch ein eine Querbohrung des Gewindezapfens passierendes Sicherungselement gegenüber dem zwischen den beiden Gewindezapfen angeordneten Bund in einem Abstand gehalten wird, der die Drehbeweglichkeit der Anschlußöse gegenüber dem Gewindebolzen gewährleistet. Die bekannte Konstruktion erfüllt zwar die funktionsmäßig an sie zu stellenden Anforderungen, sie vermag indes insofern nicht voll zu befriedigen, als sie aus einer Vielzahl von zudem vergleichsweise komplizierten Teilen besteht und folglich dem ausgesprochenen Massenartikelcharakte von Ringschrauben nicht gerecht wird.

Der Erfindung liegt die Aufgabe zugrunde, eine Ringschraube der in Betracht gezogenen Art zu schaffen, die sich durch einen besonders einfachen Aufbau auszeichnet und aus nur zwei zusammensteckbaren Teilen besteht. Diese Aufgabe wird wird bei einer gattungsgemäßen Ringschraube dadurch gelöst, daß der Gewindezapfen Teil einer Verankerungsschraube ist, deren Kopf einen zylindrischen Abschnitt und einen sich hieran anschließenden, das Halteglied bildenden Ringflansch formt, wobei der zylindrische Abschnitt des Kopfes einen größeren Durchmesser als der Gewindezapfen hat und sein dem Ringflansch abgewandtes Ende im montierten Zustand der Ringschraube eine über die sich senkrecht zur Längsachse der Verankerungsschraube erstreckende Unterseite der Anschlußöse vorstehende Auflagefläche bildet.

Als besonders vorteilhaft erweist sich eine Ringschraube mit deren Anschlußöse ein mit dem Kopf der Verankerungsschraube kuppelbares Schraubwerkzeug verbunden ist, über das durch die Anschlußöse eine Schraubbewegung in die Verankerungsschraube einleitbar ist.

Weitere Einzelheiten und Merkmale der Erfindung ergeben sich aus den Unteransprüchen und der nachstehenden Beschreibung zweier in der beigefügten Zeichnung dargestellter Ausführungsformen. Es zeigen:
Fig. 1 teilweise im Schnitt die Vorderseite der Anschlußöse einer ersten Ringschraube,
Fig. 2 das Einführen einer Gewindeschraube in die Anschlußöse gemäß Fig. 1,
Fig. 3 teilweise im Schnitt die Vorderansicht der in den Figuren 1 und 2 dargestellten Teile, nachdem diese unverlierbar miteinander verbunden sind,
Fig. 4 teilweise im Schnitt die Seitenansicht der Ringschraube gemäß Fig. 3,
Fig. 5 teilweise im Schnitt die Vorderansicht einer modifizierten Ringschraube,
Fig. 6 teilweise im Schnitt die Seitenansicht der Ringschraube gemäß Fig. 5,
Fig. 7 teilweise im Schnitt die Seitenansicht einer mit einem Schraubwerkzeug ausgestatteten Ringschraube,
Fig. 8 teilweise im Schnitt die Draufsicht auf die Ringschraube nach Fig. 7,
Fig. 9 eine der Fig. 8 entsprechende Draufsicht auf eine geringfügig modifizierte Ringschraube,
Fig. 10 teilweise im Schnitt die Seitenansicht einer weiteren mit einem Schraubwerkzeug versehenen Ringschraube,
Fig. 11 eine Teildraufsicht auf die Ringschraube gemäß Fig. 10,
Fig. 12 wiederum teilweise im Schnitt die Seitenansicht einer modifizierten Ringschraube,
Fig. 13 die Teildraufsicht auf die Ringschraube gemäß Fig. 12,
Fig. 14 teilweise im Schnitt die Seitenansicht einer fünften Ringschraube mit einem Werkzeug,
Fig. 15 die Teildraufsicht auf die Ringschraube gemäß Fig. 14,
Fig. 16 teilweise im Schnitt die Seitenansicht einer Ringschraube mit einem zur Drehmomentkontrolle dienenden Schraubwerkzeug,
Fig. 17 die Teildraufsicht auf die Ringschraube und das Schraubwerkzeug gemäß Fig. 16,
Fig. 18 teilweise im Schnitt die Seitenansicht einer weiteren Ringschraube mit einem ebenfalls zur Drehmomentanzeige dienenden Schraubwerkzeug,
Fig. 19 die Teildraufsicht auf die Ringschraube gemäß Fig. 18 und
Fig. 20 einen Schnitt längs der Linie XX-XX in Fig. 19.

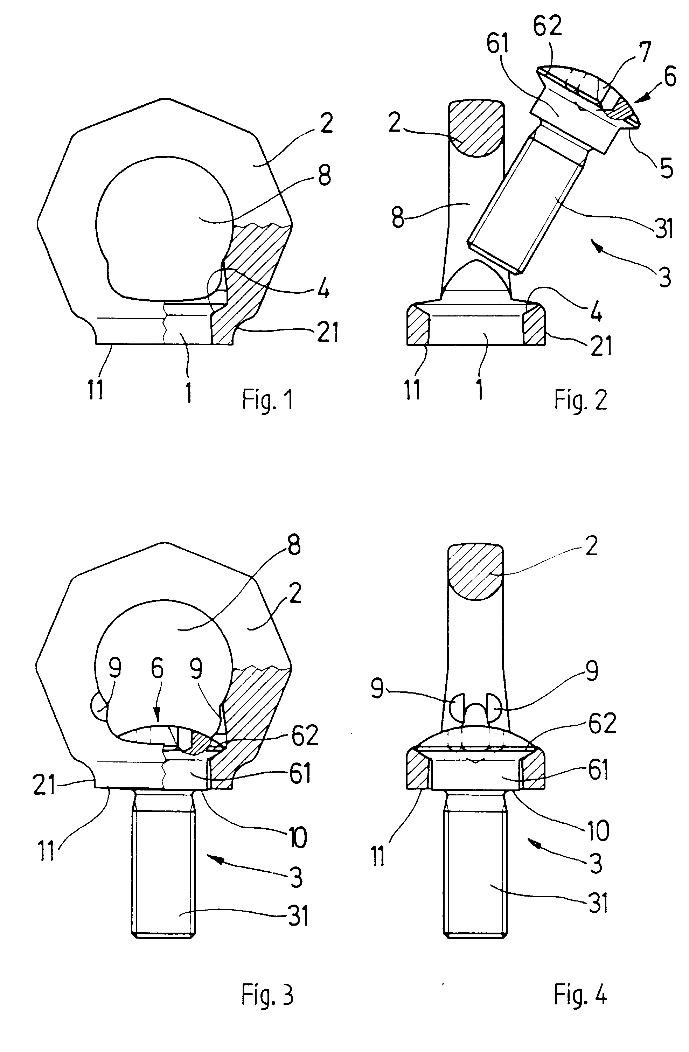

Die Figuren 1 bis 4 zeigen eine besonders vorteilhafte Ausführungsform einer Ringschraube. In Figur 1 ist die mit einer von einer Bohrung 1 gebildeten Einstecköffnung ausgestattete Anschlußöse 2 einer Ringschraube vor der Verbindung mit einer Verankerungsschraube 3 dargestellt. Die Anschlußöse 2 weist im Bereich des Ösengrundes 21 eine umlaufende Stützfläche 4 auf, gegen die sich eine Gegenfläche 5 eines am oberen Ende der Verankerungsschraube 3 angeordneten Kopfes 6 anlegen kann. Der Kopf 6 hat einen zylindrischen Abschnitt 61 und einen sich hieran anschließenden Ringflansch 62. Im Kopf 6 befindet sich eine Ausnehmung 7 mit einem Innensechskant, über das mit Hilfe eines geeigneten Werkzeuges eine Drehbewegung in die Verankerungsschraube 3 einleitbar ist. Wie aus Figur 2 erkennbar, läßt sich der Gewindezapfen 31 der Verankerungsschraube 3 bei der Montage der Ringschraube problemlos in die Bohrung 1 stecken und in die in den Figuren 3 und 4 dargestellte Position überführen. Nach dem Zusammenfügen der Anschlußöse 2 und der Verankerungsschraube 3 werden im Bereich der Öffnung 8 der Anschlußöse 2 Sperrelemente 9 bildende Vorsprünge angestaucht, die die Unverlierbarkeit der Verankerungsschraube 3 gegenüber der Anschlußöse 2 gewährleisten. Durch die Ausbildung und Lage des Kopfes 6 der Verankerungsschraube 3 nach Art eines Senkschraubenkopfes bleibt nicht nur der Freiraum der Öffnung 8 weitgehend erhalten, sondern werden die von der Anschlußöse 2 auf den Kopf 6 übertragenen Kräfte zudem an einer günstigen Stelle in die Verankerungsschraube 3 eingeleitet. Die Figuren 3 und 4 zeigen, daß das untere Ende des Kopfes 6 eine Auflagefläche 10 bildet, die leicht über die Unterseite 11 der Anschlußöse 2 vorsteht, so daß deren Drehbeweglichkeit im montierten Zustand gewährleistet ist. Durch die Auflagefläche 10 erreicht man einen Abstützeffekt, der die Biegebelastung der Verankerungsschraube 3 in hohem Maße reduziert.

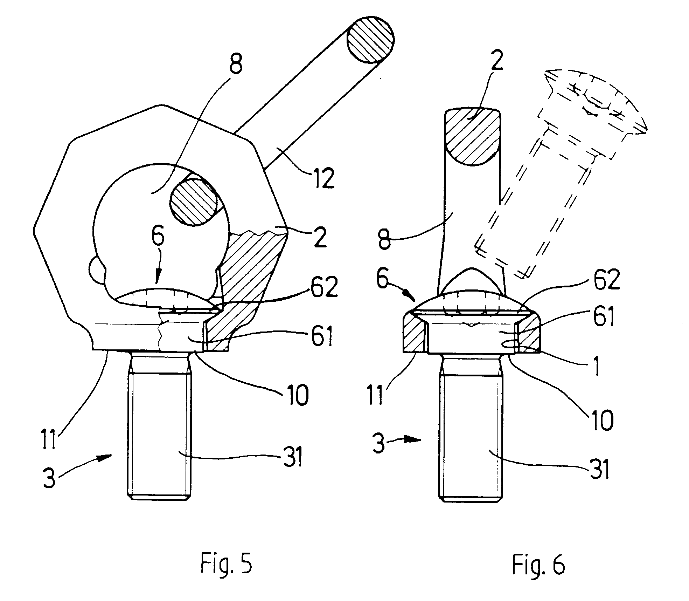

Statt einer Unverlierbarkeitssicherung der Verankerungsschraube 3 durch eine örtliche plastische Verformung der Anschlußöse 2 kann zur Sicherung der Verankerungsschraube 3 auch ein von einem Übergangsglied gebildetes Sperrelement 12 in die Anschlußöse 2 eingeschweißt werden, wie dies beim Ausführungsbeispiel gemäß den Figuren 5 und 6 gezeigt ist.

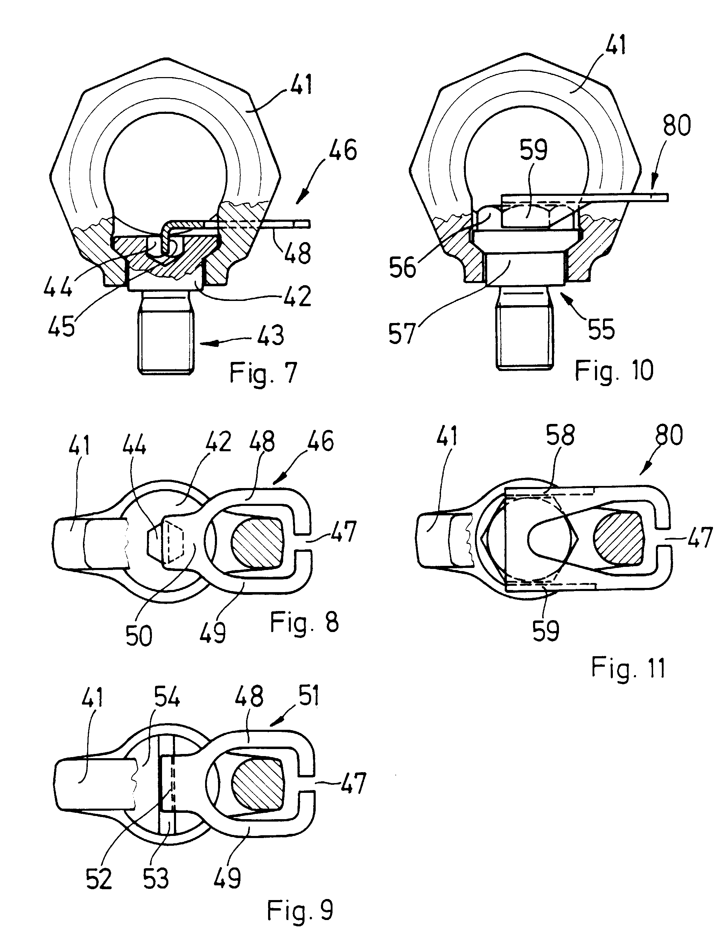

In den Figuren 7 und 8 ist 41 eine Anschlußöse, die wiederum drehbar auf dem Kopf 42 einer Verankerungsschraube 43 gelagert ist. Der Kopf 42 der Verankerungsschraube weist ein Innensechskant 44 auf, mit dem ein als Schneide ausgebildeter Schraubteil 45 eines Schraubwerkzeuges 46 zur Übertragung einer Schraubbewegung von der Anschlußöse 41 auf die Verankerungsschraube 43 vorübergehend kuppelbar ist, so daß die Montage und Demontage in gleicher Weise erfolgen kann, wie dies von einstückigen Ringschrauben her bekannt ist. Das Schraubwerkzeug 46 besteht aus einem als Stanzteil ausgebildeten, eine Öffnung 47 aufweisenden Bügel, dessen Schenkel 48 und 49 über ein den Schraubteil 45 tragendes Joch 50 miteinander verbunden sind. Wie aus Figur 8 erkennbar, ist die Öffnung 47 des Bügels schmaler als die Breite des Querschnitts der Anschlußöse 41. Dies bedeutet, daß das Schraubwerkzeug 46 unverlierbar mit der Anschlußöse 41 verbunden ist. Aufgrund der Elastizität des für das Schraubwerkzeug 46 verwendeten Materials ist es jedoch möglich, die Öffnung 47 so weit aufzuweiten, daß das Schraubwerkzeug bei Bedarf von der Anschlußöse 41 getrennt bzw. nachträglich mit dieser verbunden werden kann.

Während der Schraubteil 45 des Schraubwerkzeuges 46 vergleichsweise schmal ist, weist das in Figur 9 dargestellte Schraubwerkzeug 51 einen breiteren als Schneide ausgebildeten Schraubteil 52 auf, der in den Schlitz 53 des Kopfes 54 einer modifizierten Verankerungsschraube 55 greift.

In den Figuren 10 und 11 ist eine Anschlußöse 41 mit einer als Außensechskantschraube ausgebildeten Verankerungsschraube 55 unverlierbar verbunden. Über das Außensechskant 56 des Kopfes 57 dieser Verankerungsschraube greifen abgewinkelte Flansche 58 und 59 eines wiederum bügelförmigen Schraubwerkzeuges 80.

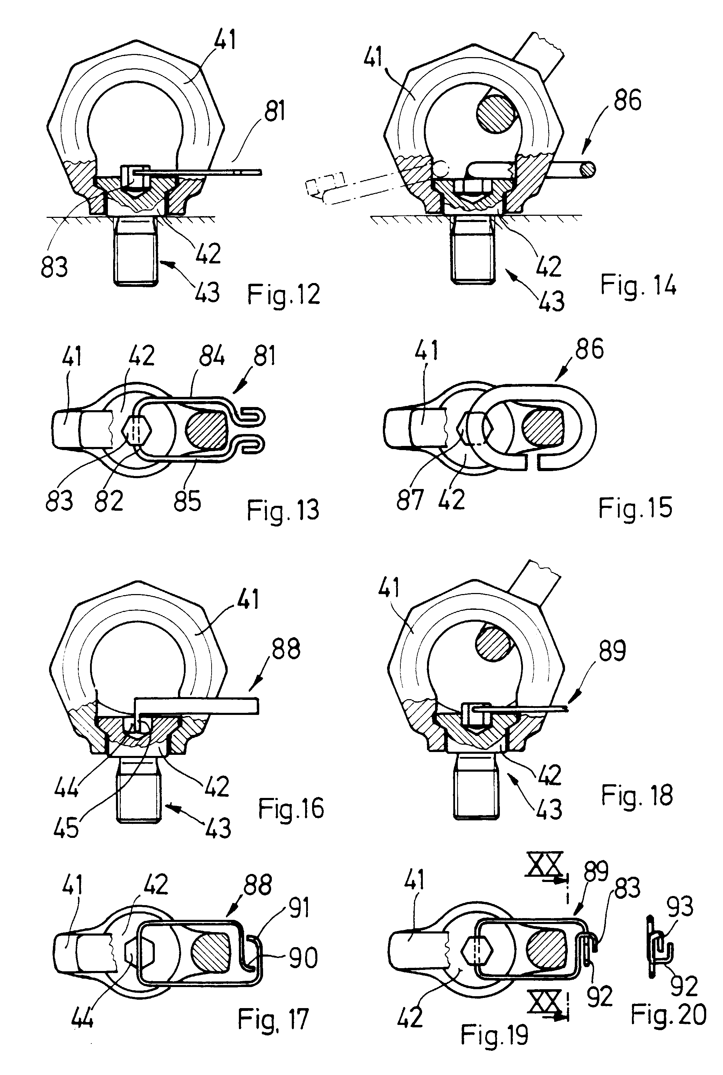

Ein Schraubwerkzeug 81, das aus einem Drahtbügel gebogen ist, der im Bereich seines Joches 82 mit einem von einer Sechskantnuß gebildeten Schraubteil 83 verbunden ist, zeigen die Figuren 12 und 13. Auch hier sind die Schenkel 84 und 85 elastisch ausgebildet, so daß bei Bedarf eine Trennung des normalerweise unverlierbar mit der Anschlußöse 41 verbundenen Schraubwerkzeuges 81 von der Anschlußöse 41 möglich ist. Ein Schraubwerkzeug 86, das aus einem offenen Ovalglied und einem mit diesem Ovalglied verschweißten Schraubteil 87 besteht, ist in den Figuren 14 und 15 dargestellt, wobei in der Figur 14 durch strichpunktierte Linien die ausgekuppelte, d.h. unwirksame Stellung des Schraubwerkzeuges 86 angedeutet ist.

In den Figuren 16 bis 20 sind schließlich zwei Schraubwerkzeuge 88 und 89 gezeigt, die zur Anzeige eines Soll-Drehmomentes genutzt werden können. Bei dem Schraubwerkzeug 88 handelt es sich um eine gestanzte Feder, deren Enden Anschläge 90 und 91 bilden, die dem Benutzer in dem Augenblick, in dem sie gegeneinander anschlagen, signalisieren, daß die Verankerungsschraube 43 hinreichend fest in die für ihn vorgesehene Bohrung eingeschraubt ist.

Anstelle einer gestanzten Feder wird bei dem Schraubwerkzeug 89 eine aus Rundmaterial gebogene Feder verwendet, deren hakenförmige Enden wiederum als Anschläge 92 und 93 ausgebildet sind. Die Anschläge 90,91 bzw. 92,93 verhindern im übrigen beim Lösen der Verankerungsschraube 43 eine plastische Verformung der bügelförmigen Schraubwerkzeuge 88 und 89 in Fällen, in denen es im Bereich des Gewindes zur Bildung von Passungsrost gekommen ist.

## Patentansprüche

1. Ringschraube mit einer zum Einhängen eines Anschlag- oder Zurrmittels dienenden Anschlußöse und einem zu ihrer Befestigung an einem Gegenstand dienenden Gewindezapfen, der sich über ein Halteglied am mit einer Bohrung versehenen Osengrund abstützt und in den über das Halteglied eine Drehbewegung einleitbar ist, **dadurch gekennzeichnet**, daß der Gewindezapfen (31) Teil einer Verankerungsschraube (3) ist, deren Kopf (6) einen zylindrischen Abschnitt (61) und einen sich hieran anschließenden, das Halteglied bildenden Ringflansch (62) formt, wobei der zylindrische Abschnitt (61) des Kopfes (6) einen größeren Durchmesser als der Gewindezapfen (31) hat und sein dem Ringflansch (62) abgewandtes Ende im montierten Zustand der Ringschraube eine über die sich senkrecht zur Längsachse der Verankerungsschraube (3) erstrekkende Unterseite (11) der Anschlußöse (2) vorstehende Auflagefläche (10) bildet.

2. Ringschraube nach Anspruch 1, **dadurch gekennzeichnet**, daß die sich berührenden Flächen (4,5) des Ringflansches (62) des Kopfes (6) der Verankerungsschraube (3) und des Ösengrundes (21) konisch ausgebildet sind.

3. Ringschraube nach Anspruch 1 oder 2, **dadurch gekennzeichnet**, daß die Verankerungsschraube (3) als Innensechskantschraube ausgebildet ist.

4. Ringschraube nach einem oder mehreren der Ansprüche 1 bis 3, **dadurch gekennzeichnet**, daß zur Sicherung der Unverlierbarkeit der Verankerungsschraube (3) in der Bohrung (1) des Ösengrundes (21) mindestens ein die axiale Beweglichkeit der Verankerungsschraube (3) einschränkendes Sperrelement (9;12) dient.

5. Ringschraube nach einem oder mehreren der Ansprüche 1 bis 4, **dadurch gekennzeichnet**, daß die Verankerungsschraube (3) von der der Anschlußöse (2) zugewandten Seite des Ösengrundes (21) in dessen Bohrung (1) einsteckbar ist.

6. Ringschraube nach Anspruch 4 oder 5, **dadurch gekennzeichnet**, daß das Sperrelement (9) von einem einen Anschlag für den Kopf (6) der Verankerungsschraube (3) bildenden Vorsprung der Anschlußöse (2) gebildet wird.

7. Ringschraube nach Anspruch 4 oder 5, **dadurch gekennzeichnet**, daß das Sperrelement (12) von einem in die Öffnung (8) der Anschlußöse (2) eingeschweißten Übergangsglied gebildet wird.

8. Ringschraube nach einem oder mehreren der Ansprüche 1 bis 7, **dadurch gekennzeichnet**, daß mit der Anschlußöse (41) ein mit dem Kopf (42,54,57) der Verankerungsschraube (43,55) kuppelbares Schraubwerkzeug (46,51,80,81,86,88,89) verbunden ist, über das durch die Anschlußöse (41) eine Schraubbewegung in die Verankerungsschraube (43,55) einleitbar ist.

9. Ringschraube nach Anspruch 8, **dadurch gekennzeichnet**, daß das Schraubwerkzeug (46,51,80,81,86,88,89) aus einem zu seiner Halterung an der Anschlußöse (41) dienenden Bügel und einem Schraubteil (45,52,83,87) besteht.

10. Ringschraube nach Anspruch 9, **dadurch gekennzeichnet**, daß der Schraubteil (45,52,83,87) im Bereich des Joches (50,82) des Bügels angeordnet ist.

11. Ringschraube nach Anspruch 9 oder 10, **dadurch gekennzeichnet**, daß die Öffnung (47) des Bügels schmaler als die geringste Breite des Querschnitts der Anschlußöse (41) ist.

12. Ringschraube nach einem oder mehreren der Ansprüche 9 bis 11, **dadurch gekennzeichnet**, daß das Schraubwerkzeug (81,86,89) einen Bügel aufweist, der aus einem gebogenen Drahtabschnitt besteht.

13. Ringschraube nach einem oder mehreren der Ansprüche 9 bis 11, **dadurch gekennzeichnet**, daß das Schraubwerkzeug (46,51, 80,88) als Stanzteil ausgebildet ist.

14. Ringschraube nach einem oder mehreren der Ansprüche 9 bis 13, **dadurch gekennzeichnet**, daß die Schenkel (48,49,84,85) des Bügels zwecks vorübergehender Veränderung der Größe der Öffnung (47) des Bügels deformierbar sind.

15. Ringschraube nach einem oder mehreren der Ansprüche 8 bis 14, **dadurch gekennzeichnet**, daß das Schraubwerkzeug (88,89) als Drehmomentanzeiger ausgebildet ist.

16. Ringschraube nach Anspruch 15, **dadurch gekennzeichnet**, daß das Schraubwerkzeug (88,89) zwei um durch ein Anschlagpaar (90,91;92,93) begrenzte Beträge elastisch auseinanderspreizbare Schenkel aufweist, deren maximale Spreizstellung dem zulässigen Grenzdrehmoment für das Einschrauben der Verankerungsschraube (43) entspricht.

17. Ringschraube nach Anspruch 16, **dadurch gekennzeichnet**, daß die Anschläge (90-93) des Anschlagpaares hakenförmig ausgebildet sind.

## Claims

1. An eyebolt having a connecting eyelet serving the suspension of a lifting or lashing means, and having a threaded journal which serves to fasten it to an object and is supported via a holding member against the bored-through eyelet base and in which, via the holding member, a rotary motion can be induced, characterized therein that the threaded journal is part of an anchor bolt, the head of which fashions a cylindrical segment and a thereto adjoined annular flange forming the holding member, the cylindrical segment of the head having a larger diameter than the threaded journal and its end facing away from the annular flange, in the fitted state of the eyebolt, forming a bearing surface protruding over the underside of the connecting eyelet, which underside extends perpendicularly to the longitudinal axis of the anchor bolt.

2. The eyebolt as claimed in claim 1, characterized therein that the mutually touching faces of the annular flange of the head of the anchor bolt and of the eyelet base are conically configured.

3. The eyebolt as claimed in claim 1 or 2, characterized therein that the anchor bolt is configured as a hexagon socket screw.

4. The eyebolt as claimed in one or more of claims 1 to 3, characterized therein that the securement of the captiveness of the anchor bolt in the bore of the eyelet base is served by at least one locking element restricting the axial mobility of the anchor bolt.

5. The eyebolt as claimed in one or more of claims 1 to 4, characterized therein that the anchor bolt can be inserted, from that side of the eyelet base facing the connecting eyelet, into the bore of said eyelet base.

6. The eyebolt as claimed in claim 4 or 5, characterized therein that the locking element is formed by a projection of the connecting eyelet, which projection forms a stop for the head of the anchor bolt.

7. The eyebolt as claimed in claim 4 or 5, characterized therein that the locking element is formed by a transition member welded into the opening of the connecting eyelet.

8. The eyebolt as claimed in one or more of claims 1 to 7, characterized therein that to the connecting eyelet there is connected a screwing tool which can be coupled to the head of the anchor bolt and by means of which, by virtue of the connecting eyelet, a screwing motion can be induced in the anchor bolt.

9. The eyebolt as claimed in claim 8, characterized therein that the screwing tool comprises a bow, which serves to hold it against the connecting eyelet, and a screwing part.

10. The eyebolt as claimed in claim 9, characterized therein that the screwing part is disposed in the region of the crossbar of the bow.

11. The eyebolt as claimed in claim 9 or 10, characterized therein that the opening of the bow is narrower than the smallest width of the cross section of the connecting eyelet.

12. The eyebolt as claimed in one or more of claims 9 to 11, characterized therein that the screwing tool exhibits a bow consisting of a bent wire segment.

13. The eyebolt as claimed in one or more of claims 9 to 11, characterized therein that the screwing tool is configured as a stamped part.

14. The eyebolt as claimed in one or more of claims 9 to 13, characterized therein that the legs of the bow are deformable for the purpose of temporarily altering the size of the opening of the bow.

15. The eyebolt as claimed in one or more of claims 8 to 14, characterized therein that the screwing tool is configured as a torque indicator.

16. The eyebolt as claimed in claim 15, characterized therein that the screwing tool exhibits two legs, which can be elastically spread apart by amounts limited by a pair of stops and the maximum spread setting of which corresponds to that limit torque which allows the anchor bolt to be screwed in.

17. The eyebolt as claimed in claim 16, characterized therein that the stops of the pair of stops are of hook-shaped configuration.

## Revendications

1. Vis à anneau comprenant un anneau de raccordement servant à accrocher un moyen d'attache ou d'amarrage et un téton fileté servant à la fixer à un objet, qui s'appuie, par l'intermédiaire d'un organe de retenue contre le fond de l'anneau muni d'un perçage et auquel on peut transmettre un mouvement de rotation par l'intermédiaire de l'organe de retenue, caractérisée en ce que le téton fileté (31) fait partie d'une vis d'ancrage (3) dont la tête (6) forme un segment cylindrique (61) et une collerette annulaire (62) qui y fait suite et qui forme l'organe de retenue, le segment cylindrique (61) de la tête (6) ayant un plus grand diamètre que le téton fileté (31) et son extrémité qui est éloignée de la collerette annulaire formant, dans l'état monté de la vis à anneau, une surface de portée (10) en saillie, qui s'étend sur la face inférieure (11) de l'anneau de raccordement (2), perpendiculairement à l'axe longitudinal de la vis d'ancrage (3).

2. Vis à anneau selon la revendication 1, caractérisée en ce que les surfaces (4, 5) de la collerette annulaire (62) de la tête (6) de la vis d'ancrage (3) et du fond (21) de l'anneau qui entre en contact entre elles sont de configuration conique.

3. Vis à anneau selon la revendication 1 ou 2, caractérisée en ce que la vis d'ancrage (3) est constituée par une vis à six pans creux.

4. Vis à anneau selon une des revendications 1 à 3, caractérisée en ce que, pour assurer l'imperdabilité de la vis d'ancrage (3) dans le perçage (1) du fond de l'anneau (21), on utilise au moins un élément de blocage (9 ; 12) qui limite la mobilité axiale de la vis d'ancrage (3).

5. Vis à anneau selon une ou plusieurs des revendications 1 à 4, caractérisée en ce que la vis d'ancrage (3) peut être emmanchée dans le perçage (1) du fond (21) de l'anneau en partant du côté qui est dirigé vers l'anneau de raccordement (2).

6. Vis à anneau selon la revendication 4 ou 5, caractérisée en ce que l'élément de blocage (9) est formé par une saillie de l'anneau de raccordement (2) qui forme une butée pour la tête (6) de la vis d'ancrage (3).

7. Vis à anneau selon la revendication 4 ou 5, caractérisée en ce que l'élément de blocage (12) est formé par un organe de jonction soudé dans l'ouverture (8) de l'anneau de raccordement (2).

8. Vis à anneau selon une ou plusieurs des revendications 1 à 7, caractérisée en ce qu'à l'anneau de raccordement (41) est relié un outil de vissage (46, 51, 80, 81, 86, 88, 89) qui peut être accouplé à la tête (42, 54, 57) de la vis d'ancrage (43, 55), et par l'intermédiaire duquel un mouvement de vissage peut être transmis à la vis d'ancrage (43, 55) par l'anneau de raccordement (41).

9. Vis à anneau selon la revendication 8, caractérisée en ce que l'outil de vissage (46, 51, 80, 81, 86, 88, 89) est composé d'un étrier servant à retenir l'outil à l'anneau de raccordement (41) et d'un élément de vissage (45, 52, 83, 87).

10. Vis à anneau selon la revendication 9, caractérisée en ce que l'élément de vissage (45, 52, 83, 87) est disposé dans la région de la traverse (50, 82) de l'étrier.

11. Vis à anneau selon la revendication 9 ou 10, caractérisée en ce que l'ouverture (47) de l'étrier est plus étroite que la plus faible largeur de la section de l'anneau de raccordement (41).

12. Vis à anneau selon une ou plusieurs des revendications 9 à 11, caractérisée en ce que l'outil de vissage (81, 86, 89) présente un étrier qui est composé d'un morceau de fil plié.

13. Vis à anneau selon une ou plusieurs des revendications 9 à 11, caractérisée en ce que l'outil de vissage (46, 51, 80, 88) est constitué par une pièce découpée.

14. Vis à anneau selon une ou plusieurs des revendications 9 à 13, caractérisée en ce que les branches (48, 49, 84, 85) de l'étrier peuvent être déformées pour une modification temporaire de la grandeur de l'ouverture (47) de l'étrier.

15. Vis à anneau selon une ou plusieurs des revendications 8 à 14, caractérisée en ce que l'outil de vissage (88, 89) constitue un indicateur de couple.

16. Vis à anneau selon la revendication 15, caractérisée en ce que l'outil de vissage (88, 89) présente deux branches qui peuvent être écartées élastiquement sur une distance limitée par une paire de butées (90, 91 ; 92, 93) et dont la position d'écartement maximum correspond au couple limite admissible pour le vissage de la vis d'ancrage (43).

17. Vis à anneau selon la revendication 16, caractérisée en ce que les butées (90 - 93) de la paire de butées sont en forme de crochet.
